# FASCICULE DE BREVET EUROPEEN

(11) **EP 1 142 770 B1**
(45) Date de publication et mention de la délivrance du brevet: **26.05.2004**
(21) Numéro de dépôt: 01400730.6
(22) Date de dépôt: 21.03.2001
(51) Int. Cl.: B61D 15/06, B60R 19/20

(54) **Dispositif de protection d'un véhicule contre le choc**
Vorrichtung zum Schutz eines Fahrzeuges gegen einen Aufprall
Protection device for a vehicle against an impact

(30) Priorité: 04.04.2000 FR 0004254
(43) Date de publication de la demande: 10.10.2001
(73) Titulaire: Alstom, 75116 Paris (FR)
(72) Inventeur: Gibeau, Michel, 17220 La Jarne (FR); Laporte, Jean-Jacques, 17000 La Rochelle (FR)
(74) Mandataire: de Lambilly Delorme, Marie Pierre

(56) Documents cités:
- FR-A- 2 224 325
- US-A- 4 061 385
- US-A- 4 815 777

## Description

L'invention se rapporte à un dispositif pour la protection d'un véhicule contre le choc et plus particulièrement à un dispositif comportant un élément gonflable présentant, une fois gonflé, une forme générale épousant la forme générale de la zone du véhicule à protéger.

Le dispositif de protection de l'invention s'applique de préférence au domaine ferroviaire, notamment aux tramways et analogues, pour lesquels l'élément gonflable de protection est particulièrement volumineux.

Il est connu du document GB 2 020 234 d'utiliser un coussin gonflable de protection à l'avant d'un véhicule ferroviaire pour amortir le choc lors d'un impact avec un être humain ou tout autre obstacle. Il est également connu de ce document, de gonfler le coussin préalablement au choc en injectant du gaz sous forte pression dans le coussin gonflable, le gaz étant stocké en temps normal dans des réservoirs portés par le véhicule.

Toutefois, un tel dispositif présente l'inconvénient de nécessiter un grand temps de gonflage du coussin de protection lorsque le volume du coussin gonflable est important. Or, il est indispensable que le déploiement du coussin gonflable soit très rapide afin que le dispositif de protection soit efficace même lorsque le déclenchement de l'ouverture du coussin s'effectue peu de temps avant le choc.

Un autre inconvénient de ce dispositif est la nécessité d'avoir des réservoirs de gaz de grande capacité, pour permettre le gonflage sous pression de l'élément de protection, qui sont coûteux et qui alourdissent et encombrent le véhicule ferroviaire. Par ailleurs, il est difficile pour un tel dispositif d'envisager, par analogie avec les dispositifs utilisés pour les automobiles, l'utilisation d'un générateur de gaz pyrotechnique car ce dernier présenterait alors un danger potentiel important, du fait la puissance nécessaire pour gonfler un coussin gonflable de grand volume et de la toxicité du gaz.

L'invention vise à remédier à tous ces inconvénients.

L'objet de la présente invention est donc de proposer un dispositif de protection d'un véhicule contre le choc qui assure un déploiement rapide de l'élément gonflable et qui soit simple et économique à réaliser.

L'invention a pour objet un dispositif de protection contre les chocs comportant un élément gonflable présentant, une fois gonflé, une forme générale épousant la forme générale de la zone du véhicule à protéger.

Selon l'invention, le dispositif de protection est caractérisé en ce que l'élément gonflable comporte une enveloppe qui est déployée au moyen d'une armature gonflable possédant une capacité volumique très inférieure au volume de l'enveloppe, la mise sous pression et le déploiement de l'armature gonflable assurant le déploiement rapide de l'enveloppe et provoquant simultanément le remplissage en air, par dépression, du volume intérieur de l'élément gonflable au travers de moyens d'admission portés par l'enveloppe.

On comprendra mieux les buts, aspects et avantages de la présente invention, d'après la description donnée ci-après d'un mode de réalisation préféré de l'invention et d'une variante de réalisation, présentés à titre d'exemple non limitatif, en se référant aux dessins annexés, dans lesquels :
- La figure 1 représente une vue en coupe latérale, schématique, d'un véhicule ferroviaire équipé d'un dispositif de protection selon l'invention en position déployée ;
- La figure 2 représente une vue en coupe suivant la ligne II-II de la figure 1, du véhicule équipé du dispositif selon l'invention ;
- La figure 3 est une vue en perspective de l'armature gonflable de la figure 2 représentée seule ;
- La figure 4 est une vue en perspective d'une variante de réalisation de l'armature gonflable du dispositif selon l'invention.

Pour faciliter la lecture du dessin, seuls les éléments nécessaires à la compréhension de l'invention ont été représentés.

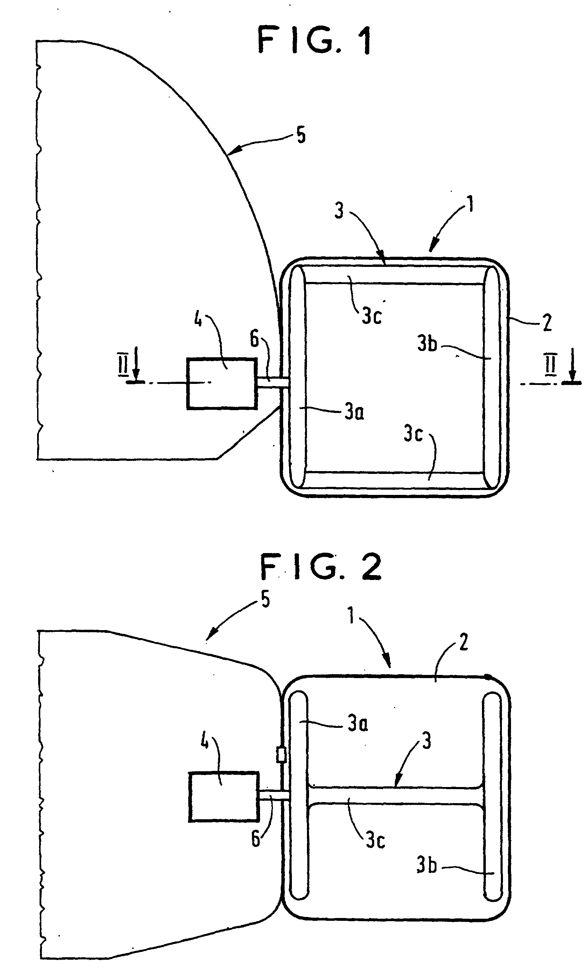

La figure 1 représente un véhicule ferroviaire 5, de type tramway, équipé d'un dispositif de protection contre les chocs constitué par un élément gonflable 1.

L'élément gonflable 1, comporte une enveloppe 2 en tissu de grand volume, de forme sensiblement parallélépipédique, qui une fois déployée vient épouser la forme de la face avant du véhicule à protéger. L'enveloppe 2 renferme une armature gonflable 3 qui possède une capacité volumique très inférieure au volume de l'enveloppe 2. L'armature gonflable 3 est raccordée par une conduite 6 à un réservoir de gaz comprimé 4 porté par le tramway 5. La conduite 6 comporte une vanne pilotée, non représentée sur les figures, fermée en temps normal, et permettant la mise sous pression de l'armature 3 pour son gonflage rapide.

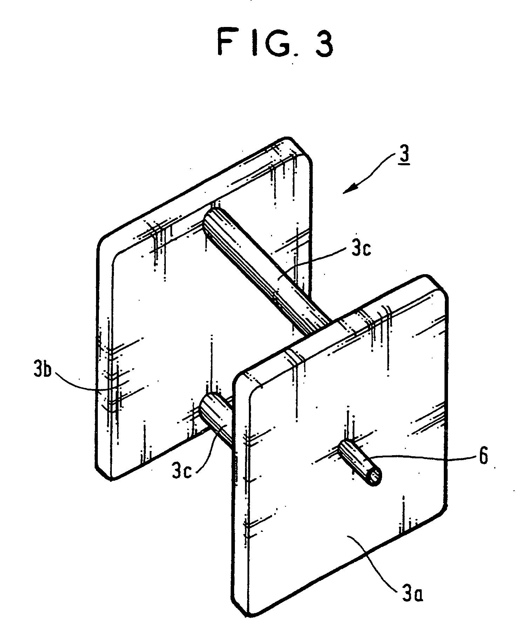

Conformément au mode de réalisation représenté sur les figures 1 à 3, l'armature gonflable 3 est constituée de deux coussins plats 3a et 3b verticaux, parallèles à la face avant du tramway 5, et de deux tubes souples 3c réalisant la communication entre les deux coussins plats 3a et 3b. Les deux tubes 3c sont disposés perpendiculairement aux deux coussins plats 3a, 3b et maintiennent, une fois l'armature 3 gonflée, les deux coussins plats 3a,3b parallèles entre eux et distant l'un de l'autre. Les coussins plats 3a, 3b et les tubes 3c sont dimensionnés de manière à ce que, une fois gonflés, le gabarit de l'armature gonflable 3 corresponde sensiblement au gabarit de l'enveloppe 2 déployée.

Pour assurer le remplissage en air de l'enveloppe 2, lors de son déploiement sous l'action du gonflage de l'armature 3, les parois de l'enveloppe 2 comportent des clapets d'admission d'air anti-retour, non représentés sur les figures, permettant le passage de l'air sous l'effet de la dépression crée à l'intérieur de l'enveloppe 2.

Dans le mode de réalisation représenté, les coussins plats 3a, 3b et les tubes 3c ne sont pas liés à l'enveloppe 2 afin que l'armature gonflable 3 puissent se déployer librement à l'intérieur de l'enveloppe 2.

Le fonctionnement du dispositif de protection va maintenant être décrit.

Sous des conditions de service normal, l'élément gonflable 1, constitué de son enveloppe 2 et de son armature gonflable 3, se trouve à l'état plié dans la partie avant du tramway à l'intérieur d'un compartiment prévu à cet effet.

Lorsque qu'un risque de collision est détecté, soit de manière automatique, soit par la suite de l'intervention d'un mécanicien, le gaz comprimé du réservoir 4 est injecté dans l'armature gonflable 3, qui sous la pression, se déploie instantanément à l'intérieur de l'enveloppe 2. Les coussins plats 3a, 3b et les tubes 3c prennent alors appui contre les parois de l'enveloppe 2 et forcent l'élément gonflable 1 à se déployer, entraînant simultanément l'arrivée d'air au travers des clapets d'admission de l'enveloppe 2. Le dispositif est alors prêt à amortir le choc avec tout objet.

Pour favoriser l'amortissement du choc, l'enveloppe 2 est poreuse ou comporte des ouvertures calibrées disposées sur la surface de l'enveloppe 2, permettant l'expulsion progressive de l'air en dehors de l'enveloppe 2 sous l'effet de la surpression crée par le choc. Bien entendu, l'armature gonflable 3 participe également à l'amortissement du choc en se déformant progressivement sous l'impact et assure une certaine maîtrise de la déformation de l'élément gonflable 1 sous l'impact.

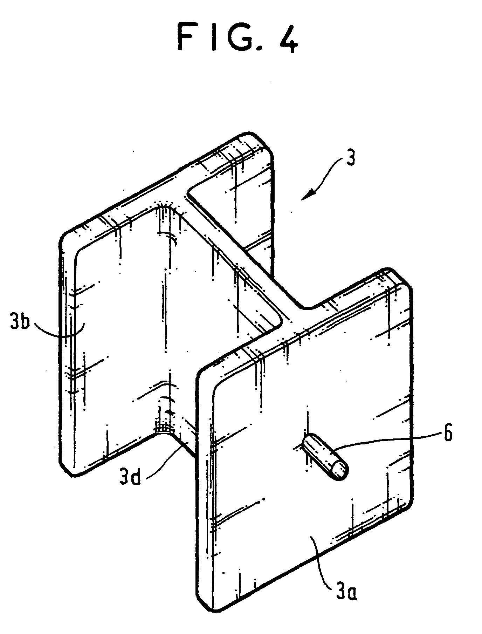

La figure 4 présente une variante de réalisation de l'invention dans laquelle les tubes souples 3c de l'armature gonflable 3 sont remplacés par un troisième coussin plat 3d disposé perpendiculairement aux deux coussins plats 3a et 3b et réalisant la communication entre ces derniers. Cette variante de réalisation permet d'avoir une rigidité accrue de l'armature 3.

Un tel dispositif réalisant le déploiement d'un élément gonflable de grand volume au moyen d'une armature gonflable possédant une capacité volumique beaucoup plus réduite que celle de l'élément gonflable, présente l'avantage de permettre, grâce à la faible capacité volumique de l'armature gonflable, une mise sous pression très rapide de cette dernière et donc un déploiement rapide de l'élément gonflable. Par ailleurs, le faible volume de l'armature gonflable permet l'emploi d'un réservoir de gaz de faible capacité et donc de réduire le poids et l'encombrement des réservoirs. Enfin, compte tenu de la faible quantité de gaz nécessaire au déploiement de l'armature, il est possible, dans une variante de réalisation, de gonfler l'armature à l'aide d'un générateur de gaz pyrotechnique, du type habituellement utilisé pour le gonflage des coussins gonflables des véhicules automobiles.

Bien entendu, l'invention n'est nullement limitée au mode de réalisation décrit et illustré qui n'a été donné qu'à titre d'exemple.

Ainsi, l'armature gonflable pourra posséder d'autres formes que celle précédemment décrites pour assurer le déploiement de l'enveloppe, comme par exemple être constitué d'un réseau de tubes souples possédant une forme parallélépipédique épousant les arêtes de l'enveloppe de l'élément gonflable.

Ainsi, dans une variante de réalisation non représentée, l'armature gonflable pourra être reliée à la surface intérieure ou extérieure de l'enveloppe, par exemple par collage ou par le passage de tubes appartenant à l'armature au travers de fourreaux, spécifiques portés par l'enveloppe. Une telle variante de réalisation présente l'avantage d'assurer un excellent positionnement géométrique des éléments de l'armature gonflable lors de son déploiement ce qui permet de concevoir un élément gonflable de forme complexe épousant parfaitement la surface à protéger.

## Revendications

1. Dispositif de protection d'un véhicule (5) contre le choc comportant un élément gonflable (1) présentant, une fois gonflé, une forme générale épousant la forme générale de la zone du véhicule (5) à protéger, **caractérisé en ce que** ledit élément gonflable (1) comporte une enveloppe (2) qui est déployée au moyen d'une armature gonflable (3) possédant une capacité volumique très inférieure au volume de l'enveloppe (2), la mise sous pression et le déploiement de ladite armature gonflable (3) assurant le déploiement rapide de ladite enveloppe (2) et provoquant simultanément le remplissage en air, par dépression, du volume intérieur de l'élément gonflable (1) au travers de moyens d'admission portés par ladite enveloppe (2).

2. Dispositif selon la revendication 1, **caractérisé en ce que** ladite armature (3) se déploie librement à l'intérieur de l'enveloppe (2).

3. Dispositif selon l'une quelconque des revendications 1 à 2, **caractérisé en ce que** ladite armature (3) est constituée de deux coussins plats (3a,3b) parallèles entre eux et de tubes souples (3c) réalisant la communication entre les coussins plats (3a,b) et assurant l'écartement desdits coussins plats (3a,3b) lors de la mise sous pression de ladite armature gonflable (3).

4. Dispositif selon l'une quelconque des revendications 1 à 2, **caractérisé en ce que** ladite armature est constituée de deux coussins plats (3a,3b) parallèles entre eux et d'un troisième coussin plat (3d) disposé perpendiculairement aux deux coussins plats (3a,3b) et réalisant la communication entre les deux coussins plats (3a,3b).

5. Dispositif selon l'une des revendications 1, 3 ou 4 **caractérisé en ce que** ladite armature (3) est reliée à la surface de l'enveloppe (2).

6. Dispositif selon l'une quelconque des revendications 1 à 5, **caractérisé en ce que** lesdits moyens d'admission d'air sont constitués par un clapet d'admission anti-retour.

7. Dispositif selon l'une quelconque des revendications 1 à 6, **caractérisé en ce que** ladite enveloppe (2) est poreuse, ou comporte des ouvertures calibrées, afin de permettre l'expulsion progressive de l'air lors du choc.

## Patentansprüche

1. Vorrichtung zum Schutz eines Fahrzeugs (5) gegen Aufprall, welche ein aufblasbares Element (1) umfasst, das, wenn es aufgeblasen ist, eine allgemeine Form aufweist, die sich an die allgemeine Form des zu schützenden Bereichs des Fahrzeugs (5) anschmiegt, **dadurch gekennzeichnet, dass** das aufblasbare Element (1) eine Hülle (2) umfasst, welche mittels einer aufblasbaren Armierung (3), die eine wesentlich kleinere Volumenkapazität aufweist als das Volumen der Hülle (2), aufgebläht wird, wobei das unter Druck setzen und das Aufblähen der aufblasbaren Armierung (3) das schnelle Aufblähen der Hülle (2) sicherstellen und gleichzeitig durch Unterdruck das Auffüllen mit Luft des inneren Volumens des aufblasbaren Elements (1) über an der Hülle (2) angebrachte Einströmvorrichtungen auslösen.

2. Vorrichtung gemäß Anspruch 1, **dadurch gekennzeichnet, dass** die Armierung (3) sich frei im Inneren der Hülle (2) aufbläht.

3. Vorrichtung gemäß irgend einem der Ansprüche 1 bis 2, **dadurch gekennzeichnet, dass** die Armierung (3) gebildet ist aus zwei zueinander parallelen flachen Kissen (3a, 3b) und Schläuchen (3c), welche die Verbindung zwischen den flachen Kissen (3a, 3b) herstellen und den Abstand der flachen Kissen (3a, 3b) bei einem unter Druck setzen der aufblasbaren Armierung (3) sicherstellen.

4. Vorrichtung gemäß irgend einem der Ansprüche 1 bis 2, **dadurch gekennzeichnet, dass** die Armierung gebildet ist aus zwei zueinander parallelen flachen Kissen (3a, 3b) und einem dritten flachen Kissen (3d), welches senkrecht zu den zwei flachen Kissen (3a, 3b) angeordnet ist und die Verbindung zwischen den zwei flachen Kissen (3a, 3b) herstellt.

5. Vorrichtung gemäß einem der Ansprüche 3 oder 4, **dadurch gekennzeichnet, dass** die Armierung (3) verbunden ist mit der Oberfläche der Hülle (2).

6. Vorrichtung gemäß irgend einem der Ansprüche 1 bis 5, **dadurch gekennzeichnet, dass** die Einlassvorrichtungen für Luft gebildet sind aus einem Rückschlag-Einlassventil.

7. Vorrichtung gemäß irgend einem der Ansprüche 1 bis 6, **dadurch gekennzeichnet, dass** die Hülle (2) porös ist oder kalibrierte Öffnungen umfasst, um das fortschreitende Entweichen von Luft bei einem Aufprall zu ermöglichen.

## Claims

1. A device for protecting a vehicle (5) against impact, the device comprising an inflatable element (1) which, once inflated, presents a general shape that fits closely over the region of the vehicle (5) to be protected, the device being **characterized in that** said inflatable element (1) includes a skin (2) which is deployed by means of inflatable reinforcement (3) having a volume that is much smaller than the volume of the skin (2), pressurizing and deploying said inflatable reinforcement (3) ensuring rapid deployment of said skin (2) and simultaneously causing the internal volume of the inflatable element (1) to be filled with air, by suction, via inlet means carried by said skin (2).

2. A device according to claim 1, **characterized in that** said reinforcement (3) is deployed freely inside the skin (2).

3. A device according to claim 1 or 2, **characterized in that** said reinforcement (3) is constituted by two flat, parallel cushions (3a, 3b), and flexible tubes (3c) providing communication between the flat cushions (3a, 3b) and ensuring that said flat cushions (3a, 3b) are spaced apart when said inflatable reinforcement (3) is put under pressure.

4. A device according to claim 1 or 2, **characterized in that** said reinforcement is constituted by two flat, parallel cushions (3a, 3b), and by a third flat cushion (3d) disposed perpendicularly to the two flat cushions (3a, 3b) and providing communication between the two flat cushions (3a, 3b).

5. A device according to claim 3 or 4, **characterized in that** said reinforcement (3) is connected to the surface of the skin (2).

6. A device according to any one of claims 1 to 5, **characterized in that** said air inlet means are constituted by an inlet check valve.

7. A device according to any one of claims 1 to 6, **characterized in that** said skin (2) is porous, or includes calibrated openings, so as to enable the air to be expelled progressively during impact.
